# FASCICULE DE BREVET EUROPEEN

(11) **EP 3 835 136 B1**
(45) Date de publication et mention de la délivrance du brevet: **23.04.2025**
(21) Numéro de dépôt: 20196571.2
(22) Date de dépôt: 17.09.2020
(51) Int. Cl.: B60R 16/04

(54) **ENSEMBLE POUR LA FIXATION D'UNE BATTERIE A BORD D'UN VÉHICULE COMPORTANT UNE BRIDE DE FIXATION AVEC UNE PATTE D'INDEXATION ET DE DÉTROMPAGE**
ANORDNUNG ZUM BEFESTIGEN EINER BATTERIE AN BORD EINES FAHRZEUGS, DIE EINEN BEFESTIGUNGSFLANSCH MIT EINER INDEXIERUNGS- UND VERWECHSLUNGSSICHERUNGSLASCHE UMFASST
ASSEMBLY FOR ATTACHING A BATTERY ON BOARD A VEHICLE COMPRISING AN ATTACHMENT FLANGE WITH A TAB FOR INDEXING AND FOOLPROOFING

(30) Priorité: 15.12.2019 FR 1914443
(43) Date de publication de la demande: 16.06.2021
(73) Titulaire: Renault s.a.s, 92100 Boulogne Billancourt (FR)
(72) Inventeur: MAILLET, Nicolas, 91190 Villiers le Bâcle (FR); PAUL, Patrice, 92140 Clamart (FR)
(74) Mandataire: Renault Group

(56) Documents cités:
- CN-A- 108 032 823
- CN-U- 202 633 410
- DE-A1- 102007 007 956
- FR-A1- 2 193 261
- US-A- 2 947 373
- US-A- 2 980 195
- US-A- 3 053 336
- US-A- 3 105 566
- US-A- 3 199 624
- US-B1- 6 230 834

## Description

### Domaine technique de l'invention

La présente invention concerne le domaine de l'agencement des véhicules automobiles.

L'invention concerne plus particulièrement un ensemble pour la fixation et l'agencement d'une batterie d'alimentation en énergie électrique à bord d'un véhicule automobile.

### Arrière-plan technique

A bord des véhicules automobiles, les batteries sont classiquement montées dans un bac de support de batterie.

Le bac de support de batterie a plusieurs fonctions parmi lesquelles le bon positionnement de la batterie à bord du véhicule, la fixation de la batterie dans le véhicule, ainsi que la protection de la batterie et de son environnement, notamment en cas de choc.

Le document US 2 947 373 concerne un ensemble pour la fixation et l'agencement d'une batterie d'alimentation en énergie électrique à bord d'un véhicule automobile selon le préambule de la revendication 1 et/ou 9.

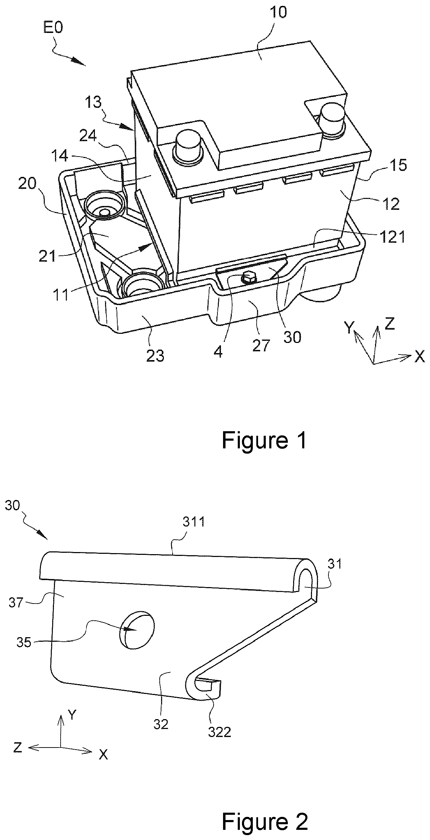

A la figure 1 est représenté un ensemble E0 selon l'état de la technique comportant une batterie 10 montée dans un bac de support de batterie 20. Le bac de support de batterie 20 comporte un fond sensiblement horizontal comprenant une face de réception 21 de la batterie. Le fond du bac de support de batterie 20 est destiné à recevoir des moyens de fixation tels que des vis pour la solidarisation du bac de support de batterie 20 avec une structure de caisse du véhicule. Le bac de support de batterie 20 comporte des parois latérales 27, 28 se dressant verticalement à partir de la face de réception 21 du fond du bac de support de batterie 20.

Une fois montée dans le bac support de batterie 20, la batterie 10 comporte une face d'appui 11 extérieure qui repose sur la face de réception 21 du support de batterie 20.

La batterie 10 comporte quatre faces latérales 12, 13, 14, 15 orthogonales à la face d'appui 11 dont une première face latérale 12 extérieure et une deuxième face latérale 13 extérieure opposées. A leur partie inférieure, la première face latérale 12 et la deuxième face latérale 13 sont chacune munie d'un talon longitudinal 121 de fixation en saillie.

La batterie 10 est fixée au bac de support de batterie 20 au moyen d'une bride de fixation 30 de l'art antérieur représentée à la figure 2. La bride de fixation 30 comporte une portion de retenue 311 longitudinale qui coopère avec le talon 121 de la première face latérale 12 pour serrer la face d'appui de la batterie contre la face de réception 21 du bac de support de batterie 20.

Une première paroi latérale 27 du bac de support de batterie en regard de la bride de fixation 30 présente un décrochement 29 délimitant un espace permettant l'agencement de la bride de fixation 30. L'espace présente une forme complémentaire de celle de la bride de fixation 30 pour permettre un détrompage lors du montage de la bride de fixation 30 dans l'espace.

Une deuxième paroi latérale 28 du bac de support de batterie 20 opposée à la première paroi latérale 27 comporte un rebord (non visible) prenant appui sur le talon de la deuxième face latérale 13 de la batterie pour bloquer la batterie 10 verticalement.

Un dispositif de serrage 4 de type vis-écrou permet de fixer la bride de fixation 30 sur le bac de support de batterie 20.

Le bac de support de batterie 20 comporte quatre butées latérales destinées à être en contact respectivement avec les quatre faces latérales 12, 13, 14, 15 de la batterie 10. Une butée est par exemple une partie d'une paroi latérale 27, 28 du bac de support de batterie 20 ou une excroissance dans le bac de support de batterie 20, formée en saillie depuis la face de réception 21 de la batterie 10.

Ainsi, selon l'art antérieur, la bride de fixation assure simplement une fonction de blocage vertical de la batterie sur un premier côté et le bac de support de batterie assure les autres fonctions :
- de bon positionnement et de blocage latéral de la batterie grâce aux quatre butées,
- de blocage vertical de la batterie sur un deuxième côté grâce au rebord prenant appui sur le talon de la deuxième face latérale de la batterie, et
- de bon positionnement de la bride de fixation grâce au décrochement délimitant l'espace permettant l'agencement de la bride de fixation.

Cependant, un tel bac de support de batterie est encombrant et ne permet pas de répondre à certaines contraintes d'architecture, notamment dans le cas de l'implantation d'une batterie dans l'habitacle et/ou selon une orientation dans l'espace selon laquelle la face d'appui du boîtier s'étend dans un plan vertical.

L'invention propose une solution visant à pallier les inconvénients précités. Un objectif de l'invention est de proposer un ensemble pour la fixation et l'agencement d'une batterie à bord d'un véhicule automobile comportant une bride de fixation assurant des fonctions :
- de positionnement avec détrompage et de blocage latéral de la batterie,
- de positionnement avec détrompage de la bride de fixation,
le support de batterie de l'ensemble pouvant aussi être simplifié afin de réduire son encombrement.

### Résumé de l'invention

L'invention propose un ensemble pour la fixation et l'agencement d'une batterie d'alimentation en énergie électrique à bord d'un véhicule automobile, ensemble qui comporte :
- un support de batterie horizontal comportant une face de réception de la batterie,
- un boîtier de la batterie comportant :
   une face d'appui extérieure qui repose sur la face de réception du support de batterie ; et
   une face latérale extérieure, orthogonale à ladite face d'appui qui est munie d'un talon de fixation longitudinal en saillie de la face latérale, la face latérale comportant au moins une encoche,
- une bride de fixation comportant une portion de retenue longitudinale qui coopère avec le talon pour serrer ladite face d'appui du boîtier de la batterie contre ladite face de réception du support de batterie, et
- un dispositif de serrage de la bride de fixation agencé pour fixer la bride de fixation sur le support de batterie,
la bride de fixation comportant une patte de positionnement et de détrompage qui a des dimensions complémentaires de celles de ladite encoche et qui, en position relative correcte de la batterie et de la bride de fixation sur le support de batterie, est reçue dans ladite encoche.

Selon l'invention :
- le dispositif de serrage comporte au moins une vis et un écrou et la bride de fixation comprend une plaque centrale s'étendant horizontalement en vis-à-vis du support de batterie, et la plaque centrale comporte un trou traversant agencé pour recevoir la vis selon une direction verticale,
- la plaque centrale comporte un premier bord longitudinal comportant la portion de retenue de la bride de fixation et la patte de positionnement et de détrompage comporte un premier tronçon proximal s'étendant dans le plan de la plaque centrale en saillie du premier bord,
- la patte de positionnement et de détrompage comporte un deuxième tronçon d'extrémité relié au premier tronçon par un pli longitudinal, le deuxième tronçon étant reçu dans l'encoche de la face latérale du boîtier de la batterie,
- la portion de retenue est une portion repliée longitudinalement vers le haut et présentant une section transversale en U,
- la portion de retenue comporte une découpe agencée en vis-à-vis du trou traversant pour permettre la fixation de l'écrou sur la vis,
- la plaque centrale comporte un deuxième bord longitudinal opposé au premier bord, le deuxième bord comportant un rebord en saillie inférieure de la plaque centrale,
- le rebord est une portion repliée longitudinalement vers le bas et présentant une section transversale en U,
- le trou traversant est excentré par rapport aux deux bords longitudinaux,
- l'encoche est ouverte transversalement vers l'extérieur et/ou verticalement vers le haut pour permettre l'introduction de la patte de positionnement et de détrompage dans l'encoche.

L'invention concerne également une bride de fixation d'une batterie d'alimentation en énergie électrique à bord d'un véhicule automobile, selon la revendication 9.

### Brève description des figures

D'autres caractéristiques et avantages de l'invention apparaitront au cours de la lecture de la description détaillée qui va suivre pour la compréhension de laquelle on se reportera aux dessins annexés dans lesquels :
La figure 1 est une est une vue schématique en perspective qui représente un ensemble comportant une batterie montée dans un bac de support de batterie selon l'état de la technique ;
Lla figure 2 est une vue en perspective de la bride de fixation de la batterie selon l'état de la technique illustré à la figure 1 ;
La figure 3 est une vue de la partie inférieure de la batterie d'un ensemble selon l'invention qui représente en détail son talon de fixation et son encoche ;
La figure 4 est une vue en perspective d'un exemple de réalisation d'une plaque support de batterie appartenant à l'ensemble selon l'invention ;
La figure 5 est une vue en perspective de la bride de fixation de l'ensemble selon l'invention ;
La figure 6 est une vue analogue à celle de la figure 5 sur laquelle la bride de fixation est représentée selon un autre angle de vue ;
La figure 7 est une vue de dessus de la bride de fixation illustrée aux figures 5 et 6 ;
La figure 8 est une vue de détail en perspective qui illustre l'ensemble selon l'invention en position correcte de montage et d'assemblage de la batterie et de la bride de fixation.

### Description détaillée de l'invention

Pour la description de l'invention et la compréhension des revendications, on adoptera à titre non limitatif et sans référence limitative à la gravité terrestre les orientations longitudinale, transversale et verticale selon le repère orthogonal direct X, Y, Z indiqué aux figures dont les axes longitudinal X et transversal Y s'étendent dans un plan horizontal.

Par convention, l'axe longitudinal X est orienté de l'arrière vers l'avant; l'axe transversal Y est orienté de la droite vers la gauche et l'axe vertical Z est orienté du bas vers le haut.

Par convention, le terme « interne » désigne un élément situé à l'intérieur de la batterie par opposition au terme « externe ».

Dans la description qui va suivre, des éléments identiques, similaires ou analogues seront désignés par les mêmes chiffres de référence.

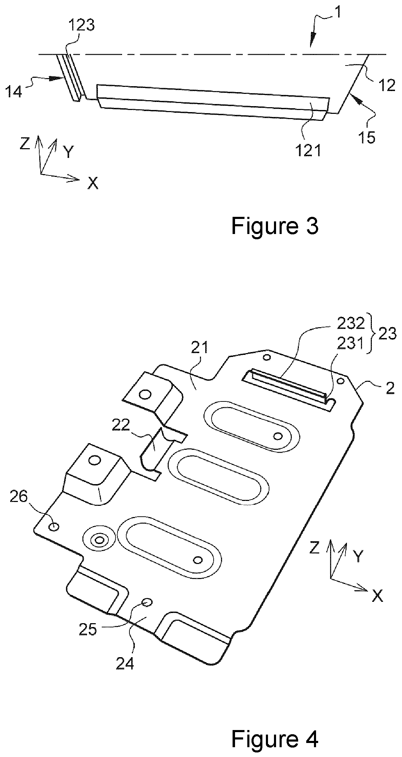

Aux figures 3 à 8, sont représentés des éléments d'un ensemble E selon l'invention. L'ensemble E est destiné à la fixation et à l'agencement d'une batterie 1 d'alimentation en énergie électrique à bord d'un véhicule automobile.

L'ensemble E comporte un support de batterie 2, un boîtier de la batterie 1, une bride de fixation 3 et un dispositif de serrage 4.

De manière connue, la batterie 1 comporte un boîtier de forme générale parallélépipédique rectangle comprenant six faces extérieures dont quatre faces verticales, une face inférieure horizontale dite face d'appui 11 destinée à être serrée en appui sur une face de réception du support de batterie 2, et une face supérieure opposée à la face d'appui 11.

Les quatre faces verticales comprennent une face latérale longitudinale 12 de droite, une face latérale longitudinale de gauche13, une face latérale transversale arrière14 et une face latérale transversale avant 15.

La face latérale 12 de droite est munie d'un talon inférieur 121 de fixation longitudinal qui est formé en saillie de la face latérale 12 de droite. Le talon 121 est adjacent à la face d'appui 11. Le talon 121 s'étend sur une portion centrale de la face latérale 12 de droite.

La face latérale de gauche 13 est également munie d'un talon inférieur (non visible) de fixation longitudinal formé en saillie de la face latérale de gauche.

L'ensemble des talons et la face d'appui 11 du boîtier de la batterie constituent ce que l'on appelle la semelle de la batterie 1 par laquelle elle repose sur le support de batterie 2.

La face latérale 12 de droite comporte une encoche 123 qui est ouverte verticalement et transversalement.

Dans l'exemple, l'encoche 123 est une fente verticale s'étendant sur toute la hauteur de la face latérale 12 de droite, à proximité de son bord arrière. L'encoche 123 se situe à côté du talon 121 et l'encoche 123 ne traverse pas le talon.

En variantes, l'encoche 123 peut comprendre une partie qui s'étend dans le talon 121, ou l'encoche 123 peut s'étendre uniquement sur une portion de la hauteur de la face latérale 12 de droite.

Il est maintenant fait référence à la figure 4 pour décrire le support de batterie 2. Le support de batterie 2 est obtenu à partir d'une plaque métallique déformée localement, découpée et pliée. Le support de batterie 2 s'étend principalement dans un plan horizontal. Le support de batterie 2 comporte une face supérieure 21 de réception de la batterie 1.

Le support de batterie 2 comporte une face inférieure opposée à la face supérieure de réception 21 de la batterie 1 et qui est destinée à être fixée sur un élément structurel du véhicule.

Le support de batterie 2 comporte des orifices de fixation 26 destinés à recevoir des moyens de fixation tels que des vis pour la solidarisation du support de batterie 2 avec l'élément structurel du véhicule sur lequel est fixé le support de batterie 2.

Le support de batterie 2 comporte une butée arrière 22 en saillie vers le haut depuis la face de réception 21. La butée arrière 22 est ici formée par une languette transversale découpée dans la plaque du support de batterie 2 en partie arrière et repliée transversalement vers le haut.

La butée arrière 22 est destinée à être en contact avec la face latérale arrière 13 de la batterie 1, une fois cette dernière correctement mise en place sur le support de batterie 2. La butée arrière 22 est alors centrée transversalement par rapport à la face latérale arrière 13 de la batterie 1.

Le support de batterie 2 comporte une butée de gauche 23 en saillie vers le haut depuis la face de réception 21. La butée de gauche 23 comporte une portion proximale verticale 231 et une portion distale horizontale 232 en regard de l'emplacement de la batterie 1. La butée de gauche 23 est ici formée par une languette longitudinale découpée dans la plaque du support de batterie 2 en partie gauche. La portion proximale verticale 231 est reliée à la face de réception 21 par un pli longitudinal vers le haut et la portion distale horizontale 232 est reliée à la portion proximale verticale par un pli longitudinal vers la droite.

La butée de gauche 23 est destinée à être en contact avec la face latérale de gauche de la batterie 1, une fois cette dernière correctement mise en place sur le support de batterie 2. La butée de gauche 23 est alors centrée longitudinalement par rapport à la face latérale de gauche de la batterie 1.

Le support de batterie 2 comporte un emplacement 24 destiné à recevoir la bride de fixation 3. L'emplacement 24 est situé en partie droite du support de batterie 2.

L'emplacement 24 est adjacent à la face latérale de droite de la batterie 1, une fois cette dernière correctement mise en place sur le support de batterie 2. L'emplacement 24 est centré longitudinalement par rapport à la face latérale 12 de droite de la batterie 1.

La batterie 1 est retenue sur le support de batterie 2 par bridage au moyen de la bride de fixation 3.

Le dispositif de serrage 4 de la bride de fixation 3 est agencé pour fixer la bride de fixation 3 sur le support de batterie 2. Le dispositif de serrage 4 comporte au moins une vis 41 et un écrou 42.

L'emplacement 24 comporte un trou de serrage 25 destiné à recevoir la vis 41 ou une tige filetée du dispositif de serrage 4.

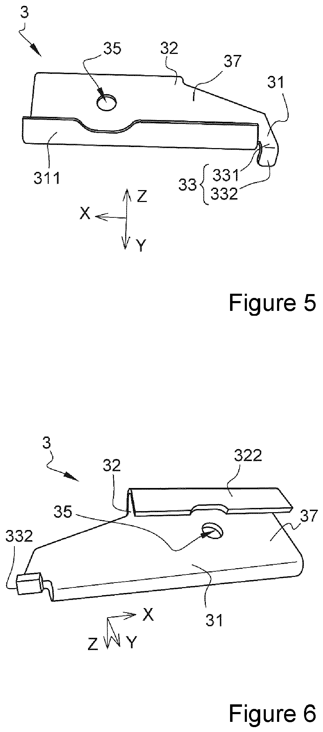

La bride de fixation 3 selon l'invention est décrite en référence plus particulièrement aux figures 5 à 7.

La bride de fixation 3 est réalisée en une seule pièce dans une plaque de préférence en acier, découpée et pliée

La bride de fixation 3 comprend une plaque centrale 37 s'étendant horizontalement en vis-à-vis du support de batterie 2. La plaque centrale 37 comporte un trou traversant 35 agencé pour recevoir la vis 41 selon une direction verticale.

La plaque centrale 37 comporte un premier bord 31 longitudinal comportant une portion de retenue 311 de la bride de fixation 3. La portion de retenue 311 longitudinale coopère avec le talon 121 pour serrer la face d'appui 11 du boîtier de la batterie 1 contre la face de réception 21 du support de batterie 2.

La portion de retenue 311 est une portion repliée longitudinalement vers le haut. La portion de retenue 311 présente une section transversale en U.

La portion de retenue 311 comporte une découpe 313 agencée en vis-à-vis du trou 35 pour permettre la fixation de l'écrou 42 sur la vis 41.

La plaque centrale 37 comporte un deuxième bord 32 longitudinal opposé au premier bord 31. Le deuxième bord 32 comporte un rebord 322 en saillie inférieure depuis la plaque centrale 37.

Le rebord 322 est une portion repliée longitudinalement vers le bas. Le rebord 322 présente une section transversale en U.

Le trou 35 est excentré par rapport aux deux bords 31, 32 longitudinaux.

Selon une caractéristique particulière de l'invention, la bride de fixation 3 comporte une patte 33 de positionnement et de détrompage qui a des dimensions complémentaires de celles de l'encoche 123.

En position relative correcte de la batterie 1 et de la bride de fixation 3 sur le support de batterie 2, la patte de positionnement et de détrompage 33 est reçue dans l'encoche 123.

La patte de positionnement et de détrompage 33 comporte un premier tronçon 331 proximal s'étendant dans le plan de la plaque centrale 37 en saillie depuis le premier bord 31.

La patte de positionnement et de détrompage 33 comporte un deuxième tronçon 332 d'extrémité relié au premier tronçon 331 par un pli longitudinal. Le deuxième tronçon 332 est reçu dans l'encoche 123 de la face latérale 12 à droite du boîtier de la batterie 1.

Le deuxième tronçon 332 est orthogonal au premier tronçon 331.

Dans l'exemple, le deuxième tronçon 332 est replié vers le bas. En variante, le deuxième tronçon peut être replié vers le haut.

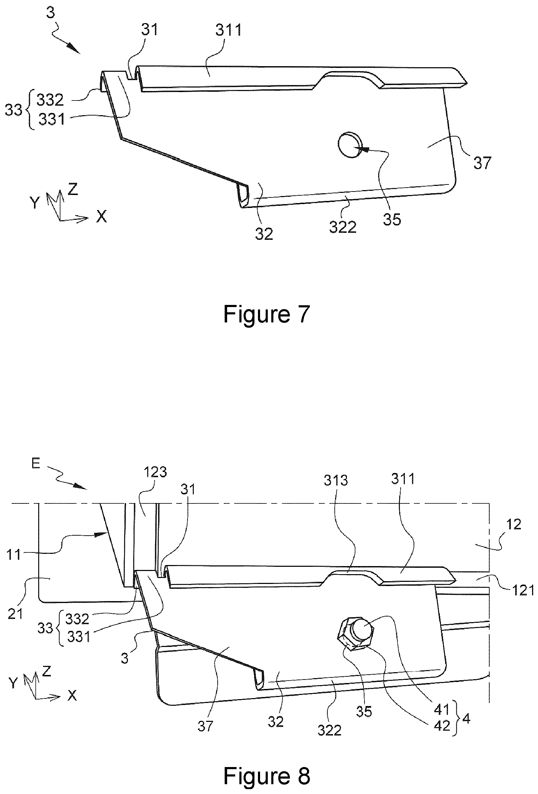

La figure 8 illustre l'ensemble E en position correcte de montage et d'assemblage de la batterie 1 et de la bride de fixation 3 sur le support de batterie 2.

La batterie 1 est positionnée sur le support de batterie 2 de sorte que la face latérale arrière de la batterie 1 est en contact avec la butée arrière 22 du support de batterie 2, la face latérale de gauche de la batterie 1 est en contact avec la butée de gauche 23 du support de batterie 2, et la bride de fixation 3 est reçue dans l'emplacement 24.

La bride de fixation 3 est positionnée de sorte que le deuxième tronçon 332 de la patte de positionnement et de détrompage 33 est reçu dans l'encoche 123 et que la vis 41 du dispositif de serrage 4 traverse l'orifice de serrage 25.

Toute autre position est empêchée grâce à la géométrie et aux dimensions particulières de la bride de fixation 3 en association avec celles de la batterie et du support.

En effet, la bride de fixation 3, ne peut pas être fixée à l'envers verticalement, c'est-à-dire avec sa face inférieure vers le haut car dans ce cas, le deuxième tronçon 332 de la patte de positionnement et de détrompage 33 ne peut pas être reçu dans l'encoche. En outre, il n'est pas possible de fixer l'écrou 42 sur la vis 41 car l'extrémité du rebord 32 en U bloque la mise en place de l'écrou 42 sur la vis 41.

La bride de fixation 3, ne peut pas non plus être fixée à l'envers horizontalement, c'est-à-dire avec le deuxième bord 32 en regard de la face latérale 12 à droite de la batterie 1, car dans ce cas, la bride de fixation 3 n'est pas en contact avec la batterie 1 en raison de la position excentrée de l'orifice de serrage 25 par rapport aux deux bords longitudinaux 31 et 32 de la bride de fixation 3.

La bride de fixation 3, ne peut pas être fixée en formant un angle dans un plan horizontal par rapport à sa position correcte de montage car il n'est alors pas possible d'introduire la vis 41 du dispositif de serrage 4 dans l'orifice de serrage 25.

La bride de fixation 3 est mise en position par exemple selon un mouvement de translation horizontale ou selon un mouvement de translation verticale. Pour permettre l'introduction de la patte de positionnement et de détrompage 33 dans l'encoche 123 lors de la mise en position de la bride de fixation 3, l'encoche 123 est ouverte transversalement vers l'extérieur et verticalement vers le haut.

En variante, l'encoche 123 peut être ouverte uniquement transversalement. Dans ce cas, la bride de fixation 3 est mise en position selon un mouvement de translation horizontale.

Selon une autre variante, l'encoche 123 peut être ouverte uniquement vers le haut. Dans ce cas, la bride de fixation 3 est mise en position selon un mouvement de translation verticale du haut vers le bas.

Le support de batterie 2 ne comporte pas de butée en contact avec la face latérale avant 15 de la batterie 1. C'est la patte de positionnement et de détrompage 33 placée dans l'encoche 123 qui empêche le déplacement de la batterie 1 vers l'avant et qui assure ainsi le blocage vers l'avant.

Le premier bord 31 longitudinal de la bride de fixation 3 en contact avec la face latérale 12 de droite empêche le déplacement de la batterie 1 vers la droite et assure ainsi le blocage vers la droite.

Selon l'invention, la bride de fixation 3 assure les fonctions :
- de blocage vertical de la batterie sur un premier côté grâce au premier bord 31 longitudinal de la bride de fixation 3,
- de positionnement correct et de blocage de la batterie vers l'avant grâce à la patte de positionnement et de détrompage 33 et vers la droite grâce au premier bord 31 longitudinal de la bride de fixation 3,
- de positionnement correct de la bride de fixation 3 grâce notamment à la patte de positionnement et de détrompage 33.

Selon l'invention, le support de batterie 2 assure les fonctions :
- de positionnement correct et de blocage de la batterie vers l'arrière et vers la gauche grâce aux deux butées 22 et 23,
- de blocage vertical de la batterie sur un deuxième côté grâce au rebord 232 prenant appui sur le talon de la face latérale de gauche de la batterie.

Le support de batterie 2 est simplifié par rapport à l'art antérieur et il est moins encombrant.

## Revendications

1. Ensemble (E) pour la fixation et l'agencement d'une batterie (1) d'alimentation en énergie électrique à bord d'un véhicule automobile, ensemble (E) qui comporte :
- un support de batterie (2) horizontal comportant une face de réception (21) de la batterie,
- un boîtier de la batterie (1) comportant :
une face d'appui (11) extérieure qui repose sur la face de réception (21) du support de batterie (2) ; et
une face latérale (12) extérieure, orthogonale à ladite face d'appui (11) qui est munie d'un talon (121) de fixation longitudinal en saillie de la face latérale (12), la face latérale (12) comportant au moins une encoche (123),
- une bride de fixation (3) comportant une portion de retenue (311) longitudinale qui coopère avec le talon (121) pour serrer ladite face d'appui (11) du boîtier de la batterie (1) contre ladite face de réception (21) du support de batterie (2), et
- un dispositif de serrage (4) de la bride de fixation (3) agencé pour fixer la bride de fixation (3) sur le support de batterie (2),
**caractérisé en ce que** la bride de fixation (3) comporte une patte de positionnement et de détrompage (33) qui a des dimensions complémentaires de celles de ladite encoche (123) et qui, en position relative correcte de la batterie (1) et de la bride de fixation (3) sur le support de batterie (2), est reçue dans ladite encoche (123), le dispositif de serrage (4) comportant au moins une vis (41) et un écrou (42) et la bride de fixation (3) comprenant une plaque centrale (37) s'étendant horizontalement en vis-à-vis du support de batterie (2), la plaque centrale (37) comportant un trou traversant (35) agencé pour recevoir la vis (41) selon une direction verticale, la plaque centrale (37) comportant un premier bord (31) longitudinal comportant la portion de retenue (311) de la bride de fixation (3) et la patte de positionnement et de détrompage (33) comportant un premier tronçon (331) proximal s'étendant dans le plan de la plaque centrale (37) en saillie du premier bord (31).

2. Ensemble (E) selon la revendication 1, **caractérisé en ce que** la patte de positionnement et de détrompage (33) comporte un deuxième tronçon (332) d'extrémité relié au premier tronçon (331) par un pli longitudinal, le deuxième tronçon (332) étant reçu dans l'encoche (123) de la face latérale (12) du boîtier de la batterie (1).

3. Ensemble (E) selon l'une quelconque des revendications 1 ou 42, **caractérisé en ce que** la portion de retenue (311) est une portion repliée longitudinalement vers le haut et présentant une section transversale en U.

4. Ensemble (E) selon la revendication 3, **caractérisé en ce que** la portion de retenue (311) comporte une découpe (313) agencée en vis-à-vis du trou traversant (35) pour permettre la fixation de l'écrou (42) sur la vis (41).

5. Ensemble (E) selon l'une quelconque des revendications 1 à 64, **caractérisé en ce que** la plaque centrale (37) comporte un deuxième bord (32) longitudinal opposé au premier bord (31), le deuxième bord (32) comportant un rebord (322) en saillie inférieure de la plaque centrale (37).

6. Ensemble (E) selon la revendication 75, **caractérisé en ce que** le rebord (322) est une portion repliée longitudinalement vers le bas et présentant une section transversale en U.

7. Ensemble (E) selon l'une quelconque des revendications 5 ou 6, **caractérisé en ce que** le trou traversant (35) est excentré par rapport aux deux bords (31, 32) longitudinaux.

8. Ensemble (E) selon l'une quelconque des revendications précédentes, **caractérisé en ce que** l'encoche (123) est ouverte transversalement vers l'extérieur et/ou verticalement vers le haut pour permettre l'introduction de la patte de positionnement et de détrompage (33) dans l'encoche (123).

9. Bride de fixation (3) d'une batterie (1) d'alimentation en énergie électrique à bord d'un véhicule automobile, la bride de fixation (3) étant destinée à un ensemble (E) comportant un boîtier de la batterie (1) comportant :
une face d'appui (11) extérieure qui repose sur un support de batterie (2) ; et
une face latérale (12) extérieure, orthogonale à ladite face d'appui (11) qui est munie d'un talon (121) de fixation longitudinal en saillie de la face latérale (12), la face latérale (12) comportant au moins une encoche (123),
la bride (3) comportant une portion de retenue (311) longitudinale destinée à coopérer avec le talon (121) pour serrer ladite face d'appui (11) du boîtier de la batterie (1) contre le support de batterie (2), la bride (3) comportant un dispositif de serrage (4) agencé pour fixer la bride de fixation (3) sur le support de batterie (2),
la bride de fixation (3) étant **caractérisée en ce qu'elle** comporte une patte de positionnement et de détrompage (33) qui a des dimensions complémentaires de celles de ladite encoche (123) et qui, en position relative correcte de la batterie (1) et de la bride de fixation (3) sur le support de batterie (2), est reçue dans ladite encoche (123), le dispositif de serrage (4) comportant au moins une vis (41) et un écrou (42) et la bride de fixation (3) comprenant une plaque centrale (37) s'étendant horizontalement en vis-à-vis du support de batterie (2), la plaque centrale (37) comportant un trou traversant (35) agencé pour recevoir la vis (41) selon une direction verticale, la plaque centrale (37) comportant un premier bord (31) longitudinal comportant la portion de retenue (311) de la bride de fixation (3) et la patte de positionnement et de détrompage (33) comportant un premier tronçon (331) proximal s'étendant dans le plan de la plaque centrale (37) en saillie du premier bord (31).

## Patentansprüche

1. Anordnung (E) zum Befestigen und Einrichten einer Batterie (1) zur elektrischen Energieversorgung an Bord eines Kraftfahrzeugs, wobei die Anordnung (E) Folgendes umfasst:
- einen horizontalen Batterieträger (2), der eine Aufnahmefläche (21) für die Batterie umfasst,
- ein Gehäuse der Batterie (1), das Folgendes umfasst:
eine äußere Auflagefläche (11), die auf der Aufnahmefläche (21) des Batterieträgers (2) ruht; und
eine äußere Seitenfläche (12), die zu der Auflagefläche (11) orthogonal ist und über einen longitudinalen Befestigungsansatz (121) verfügt, der von der Seitenfläche (12) vorsteht, wobei die Seitenfläche (12) mindestens eine Einkerbung (123) umfasst,
- einen Befestigungsflansch (3), der einen longitudinalen Halteabschnitt (311) umfasst, der mit dem Ansatz (121) zusammenwirkt, um die Auflagefläche (11) des Gehäuses der Batterie (1) gegen die Aufnahmefläche (21) des Batterieträgers (2) zu spannen, und
- eine Spannvorrichtung (4) für den Befestigungsflansch (3), die dazu eingerichtet ist, den Befestigungsflansch (3) an dem Batterieträger (2) zu befestigen,
**dadurch gekennzeichnet, dass** der Befestigungsflansch (3) eine Positionierungs- und Unverwechselbarkeitslasche (33) umfasst, die Abmessungen aufweist, die zu denen der Einkerbung (123) komplementär sind, und die, wenn die Batterie (1) und der Befestigungsflansch (3) relativ zu dem Batterieträger (2) korrekt positioniert sind, in der Einkerbung (123) aufgenommen ist, wobei die Spannvorrichtung (4) mindestens eine Schraube (41) und eine Mutter (42) aufweist und wobei der Befestigungsflansch (3) eine zentrale Platte (37) beinhaltet, die sich horizontal gegenüber dem Batterieträger (2) erstreckt, wobei die zentrale Platte (37) eine Durchgangsbohrung (35) umfasst, die dazu eingerichtet ist, die Schraube (41) entlang einer vertikalen Richtung aufzunehmen, wobei die zentrale Platte (37) einen ersten Längsrand (31) umfasst, der den Halteabschnitt (311) des Befestigungsflansches (3) umfasst, und wobei die Positionierungs- und Unverwechselbarkeitslasche (33) einen ersten proximalen Teilabschnitt (331) umfasst, der sich in der Ebene der zentralen Platte (37) von dem ersten Rand (31) vorstehend erstreckt.

2. Anordnung (E) nach Anspruch 1, **dadurch gekennzeichnet, dass** die Positionierungs- und Unverwechselbarkeitslasche (33) einen zweiten Endteilabschnitt (332) umfasst, der durch eine Längsfalte mit dem ersten Teilabschnitt (331) verbunden ist, wobei der zweite Teilabschnitt (332) in der Einkerbung (123) der Seitenfläche (12) des Gehäuses der Batterie (1) aufgenommen ist.

3. Anordnung (E) nach einem der Ansprüche 1 oder 2, **dadurch gekennzeichnet, dass** der Halteabschnitt (311) ein längs nach oben gefalteter Abschnitt ist, der einen U-förmigen Querschnitt aufweist.

4. Anordnung (E) nach Anspruch 3, **dadurch gekennzeichnet, dass** der Halteabschnitt (311) einen Ausschnitt (313) umfasst, der gegenüber der Durchgangsbohrung (35) eingerichtet ist, um das Befestigen der Mutter (42) auf der Schraube (41) zu ermöglichen.

5. Anordnung (E) nach einem der Ansprüche 1 bis 4, **dadurch gekennzeichnet, dass** die zentrale Platte (37) einen zweiten Längsrand (32) umfasst, der zu dem ersten Rand (31) entgegengesetzt ist, wobei der zweite Rand (32) eine Kante (322) umfasst, die von der zentralen Platte (37) nach unten vorsteht.

6. Anordnung (E) nach Anspruch 5, **dadurch gekennzeichnet, dass** die Kante (322) ein längs nach unten gefalteter Abschnitt ist, der einen U-förmigen Querschnitt aufweist.

7. Anordnung (E) nach einem der Ansprüche 5 oder 6, **dadurch gekennzeichnet, dass** die Durchgangsbohrung (35) in Bezug auf die zwei Längsränder (31, 32) außermittig angeordnet ist.

8. Anordnung (E) nach einem der vorhergehenden Ansprüche, **dadurch gekennzeichnet, dass** die Einkerbung (123) in Querrichtung nach außen und/oder vertikal nach oben offen ist, um das Einführen der Positionierungs- und Unverwechselbarkeitslasche (33) in die Einkerbung (123) zu ermöglichen.

9. Befestigungsflansch (3) einer Batterie (1) zur elektrischen Energieversorgung an Bord eines Kraftfahrzeugs, wobei der Befestigungsflansch (3) für eine Anordnung (E) bestimmt ist, die ein Gehäuse der Batterie (1) umfasst, das Folgendes umfasst:
eine äußere Auflagefläche (11), die auf einem Batterieträger (2) ruht; und
eine äußere Seitenfläche (12), die zu der Auflagefläche (11) orthogonal ist und über einen longitudinalen Befestigungsansatz (121) verfügt, der von der Seitenfläche (12) vorsteht, wobei die Seitenfläche (12) mindestens eine Einkerbung (123) umfasst,
wobei der Flansch (3) einen longitudinalen Halteabschnitt (311) umfasst, der dazu bestimmt ist, mit dem Ansatz (121) zusammenzuwirken, um die Auflagefläche (11) des Gehäuses der Batterie (1) gegen den Batterieträger (2) zu spannen, wobei der Flansch (3) eine Spannvorrichtung (4) umfasst, die dazu eingerichtet ist, den Befestigungsflansch (3) an dem Batterieträger (2) zu befestigen,
wobei der Befestigungsflansch (3) **dadurch gekennzeichnet ist, dass** er eine Positionierungs- und Unverwechselbarkeitslasche (33) umfasst, die Abmessungen aufweist, die zu denen der Einkerbung (123) komplementär sind, und die, wenn die Batterie (1) und der Befestigungsflansch (3) relativ zu dem Batterieträger (2) korrekt positioniert sind, in der Einkerbung (123) aufgenommen ist, wobei die Spannvorrichtung (4) mindestens eine Schraube (41) und eine Mutter (42) aufweist und wobei der Befestigungsflansch (3) eine zentrale Platte (37) beinhaltet, die sich horizontal gegenüber dem Batterieträger (2) erstreckt, wobei die zentrale Platte (37) eine Durchgangsbohrung (35) umfasst, die dazu eingerichtet ist, die Schraube (41) entlang einer vertikalen Richtung aufzunehmen, wobei die zentrale Platte (37) einen ersten Längsrand (31) umfasst, der den Halteabschnitt (311) des Befestigungsflansches (3) umfasst, und wobei die Positionierungs- und Unverwechselbarkeitslasche (33) einen ersten proximalen Teilabschnitt (331) umfasst, der sich in der Ebene der zentralen Platte (37) von dem ersten Rand (31) vorstehend erstreckt.

## Claims

1. Assembly (E) for fastening and arranging a battery (1) for supplying electrical energy on board a motor vehicle, said assembly (E) having:
- a horizontal battery support (2) having a receiving face (21) for receiving the battery,
- a housing of the battery (1) having:
an outer bearing face (11) that rests on the receiving face (21) of the battery support (2); and
an outer lateral face (12), which is orthogonal to said bearing face (11) and is provided with a longitudinal fastening heel (121) projecting from the lateral face (12), the lateral face (12) having at least one notch (123),
- a fastening flange (3) having a longitudinal retaining portion (311) that interacts with the heel (121) in order to clamp said bearing face (11) of the housing of the battery (1) against said receiving face (21) of the battery support (2), and
- a clamping device (4) for clamping the fastening flange (3), said clamping device being arranged so as to fasten the fastening flange (3) to the battery support (2),
**characterized in that** the fastening flange (3) has a positioning and keying tab (33), which has dimensions that are complementary to those of said notch (123) and which, when the battery (1) and the fastening flange (3) are in the correct relative position on the battery support (2), is received in said notch (123), the clamping device (4) having at least one screw (41) and a nut (42) and the fastening flange (3) comprising a central plate (37) extending horizontally opposite the battery support (2), the central plate (37) having a through-hole (35) arranged so as to receive the screw (41) in a vertical direction, the central plate (37) having a first longitudinal edge (31) having the retaining portion (311) of the fastening flange (3) and the positioning and keying tab (33) having a first proximal section (331) extending in the plane of the central plate (37) projecting from the first edge (31).

2. Assembly (E) according to Claim 1, **characterized in that** the positioning and keying tab (33) has a second end section (332) connected to the first section (331) by a longitudinal fold, the second section (332) being received in the notch (123) in the lateral face (12) of the housing of the battery (1).

3. Assembly (E) according to either one of Claims 1 and 2, **characterized in that** the retaining portion (311) is a longitudinally upwardly folded portion having a U-shaped cross section.

4. Assembly (E) according to Claim 3, **characterized in that** the retaining portion (311) has a cutout (313) arranged opposite the through-hole (35) in order to allow the nut (42) to be fastened to the screw (41).

5. Assembly (E) according to any one of Claims 1 to 4, **characterized in that** the central plate (37) has a second longitudinal edge (32) at the opposite end to the first edge (31), the second edge (32) having a lip (322) projecting from the bottom of the central plate (37).

6. Assembly (E) according to Claim 5, **characterized in that** the lip (322) is a longitudinally downwardly folded portion having a U-shaped cross section.

7. Assembly (E) according to either one of Claims 5 and 6, **characterized in that** the through-hole (35) is off-centre with respect to the two longitudinal edges (31, 32).

8. Assembly (E) according to any one of the preceding claims, **characterized in that** the notch (123) is open transversely outwards and/or vertically upwards in order to allow the positioning and keying tab (33) to be inserted into the notch (123).

9. Fastening flange (3) for a battery (1) for supplying electrical energy on board a motor vehicle, the fastening flange (3) being intended for an assembly (E) having a housing of the battery (1) having:
an outer bearing face (11) that rests on a battery support (2); and
an outer lateral face (12), which is orthogonal to said bearing face (11) and is provided with a longitudinal fastening heel (121) projecting from the lateral face (12), the lateral face (12) having at least one notch (123),
the flange (3) having a longitudinal retaining portion (311) intended to cooperate with the heel (121) in order to clamp said bearing face (11) of the housing of the battery (1) against the battery support (2), the flange (3) having a clamping device (4) arranged so as to fasten the fastening flange (3) to the battery support (2),
the fastening flange (3) being **characterized in that** it has a positioning and keying tab (33), which has dimensions that are complementary to those of said notch (123) and which, when the battery (1) and the fastening flange (3) are in the correct relative position on the battery support (2), is received in said notch (123), the clamping device (4) having at least one screw (41) and a nut (42) and the fastening flange (3) comprising a central plate (37) extending horizontally opposite the battery support (2), the central plate (37) having a through-hole (35) arranged so as to receive the screw (41) in a vertical direction, the central plate (37) having a first longitudinal edge (31) having the retaining portion (311) of the fastening flange (3) and the positioning and keying tab (33) having a first proximal section (331) extending in the plane of the central plate (37) projecting from the first edge (31).
